# EUROPEAN PATENT APPLICATION

(11) **EP 2 073 215 A1**
(43) Date of publication of application: **24.06.2009**
(21) Application number: 08169796.3
(22) Date of filing: 24.11.2008
(51) Int. Cl.: G21C 3/328, G21G 1/02

(54) **Fuel bundle including at least one isotope production rod**

(30) Priority: 28.11.2007 US 987165
(71) Applicant: GE-Hitachi Nuclear Energy Americas LLC, Wilmington, NC 28401 (US)
(72) Inventor: Fung Poon, Cindy, Wilmington, NC 28402-2819 (US); Mills, Vernon W., Wilmington, ND 28409 (US); Russell II, William Earl, Wilmington, NC 28405 (US)
(74) Representative: Gray, Thomas

(57) **Abstract**

The present invention is directed to the placement of one or more isotope production rods in a fuel bundle. The placement may be based on any one of, or a combination of, numerous factors such as relative location of core-monitoring equipment, the type of radioactive isotope being produced, the half-life or length of decay of the radioactive isotope, the neutron absorption rate of the target isotope to produce the radioactive isotope, the desired specific activity of the radioactive isotope being produced, the amount of neutron flux in different areas of the fuel bundle, the duration that the target isotope/radioactive isotope is expected to remain in the reactor until removed (i.e., harvested), etc.

## Description

### BACKGROUND OF THE INVENTION

A wide variety of radioactive isotopes are used for medical, industrial, research, and commercial applications. In general, radioisotopes may be produced by irradiating target isotope materials with nuclear particles. The target atoms either transmute directly into the desired isotope, or a radioisotope is produced through a chain of absorption and decay that subsequently generates the desired radioactive product.

Two different technologies are used to provide the source of radiation for radioisotope production: nuclear reactors, which produce a flux of neutrons; and particle accelerators or cyclotrons, which produce a flux of charged particles, usually protons, but sometimes electrons or other particles. For example, medical and industrial radioisotopes have been produced since 1957 by Canada's National Research Universal (NRU) reactor at the Atomic Energy of Canada's (AECL's) Chalk River Laboratories in Ontario, Canada. The NRU produces a high percentage of the world's medical and industrial radioisotopes, including molybdenum-99, a critical isotope used for medical diagnoses. Other exemplary radioisotopes used for medical, industrial, research and commercial applications include thallium-204, which is used for medical cardiac imaging; calcium-45, which is used in bone growth studies; iridium-192, which is used for nondestructive testing of construction and other materials; cobalt-60, which is used to destroy cancer cells, to disinfect surgical equipment and medications, and the sterilization of food supplies; thulium-170, which is used for portable blood irradiations for leukemia, lymphoma treatment, and power source; gadolinium-153, which is used for osteoporosis detection and SPECT imaging; nickel-63, which can be used for the creation of long-life batteries; and americium-241, which is used in smoke detectors.

In general, specimen rods containing isotope targets are inserted through penetrations in the NRU in a continuous process and subject to irradiation therein, so as to produce isotopes at a desired specific activity for use in nuclear medicine and/or industrial applications. The isotope targets are then irradiated during operation of the nuclear reactor. After irradiation, the radioisotope is recovered and used for preparing various radiopharmaceuticals for nuclear medical procedures.

### SUMMARY OF THE INVENTION

Exemplary embodiments of the present invention are directed isotope production rods. Isotope production rods may replace one or more of the fuel rods in a fuel bundle. The isotope production rods include an irradiation target such a cobalt 59, iridium 191, etc. that when irradiated within a nuclear reactor produce a radioactive isotope such as cobalt 60, iridium 192, etc. As discussed above, these radioactive isotopes have various beneficial applications.

Other exemplary embodiments of the present invention are directed to the placement of one or more isotope production rods in a fuel bundle. The placement may be based on any one of, or a combination of, numerous factors such as relative location of core-monitoring equipment, the type of radioactive isotope being produced, the half-life or length of decay of the radioactive isotope, the neutron absorption rate of the target isotope to produce the radioactive isotope, the desired specific activity of the radioactive isotope being produced, the amount of neutron flux in different areas of the fuel bundle, the duration that the target isotope/radioactive isotope is expected to remain in the reactor until removed (i.e., harvested), etc.

In one embodiment, an arrangement of fuel bundles in a nuclear reactor includes a gamma detector and at least one fuel bundle having an isotope production rod. In particular, the fuel bundle includes an outer channel, and a plurality of fuel rods disposed in fuel rod positions within the outer channel.

The fuel rods include nuclear fuel for sustaining a nuclear reaction in the nuclear reactor. Also, as mentioned above, at least one isotope production rod is included in the outer channel. The isotope production rod includes an irradiation target, which emits gamma particles if irradiated, and the isotope production rod is disposed in one of the fuel rod positions within the outer channel based on the location of the gamma detector with respect to the fuel bundle.

In another embodiment, the arrangement of fuel bundles in a nuclear reactor includes at least one fuel bundle having at least one isotope production rod. In particular, the fuel bundle includes an outer channel, and a plurality of fuel rods disposed in fuel rod positions within the outer channel. The fuel rods include nuclear fuel for sustaining a nuclear reaction in the nuclear reactor. Also, as mentioned above, at least one isotope production rod is included in the outer channel. The isotope production rod includes an irradiation target, which emits gamma particles if irradiated, and the isotope production rod is disposed in one of the fuel rod positions within the outer channel based on the absorption and the half-life of a radioactive isotope to be produced by irradiating the irradiation target.

### BRIEF DESCRIPTION OF THE DRAWINGS

The present invention will become more apparent by describing, in detail, exemplary embodiments thereof with reference to the attached drawings, wherein like elements are represented by like reference numerals, which are given by way of illustration only and thus do not limit the exemplary embodiments of the present invention.

FIG. 1 illustrates an exemplary fuel bundle of a nuclear reactor.

FIG. 2A illustrates a rod assembly for a fuel bundle in accordance with an exemplary embodiment of the invention.

FIG. 2B illustrates the multi-segment fuel rod of FIG. 2A.

FIG. 2C illustrates an exploded view of a portion of FIG. 2A to illustrate the rod assembly in further detail.

FIGS. 3A and 3B are perspective and side-view profiles illustrating the male adaptor subassembly for the rod assembly in accordance with an exemplary embodiment of the invention.

FIGS. 4A and 4B are perspective and side-view profiles illustrating the female adaptor subassembly in accordance with an exemplary embodiment of the present invention.

FIGS. 5A and 5B are perspective and side-view profiles illustrating an exemplary lower end piece of the rod assembly in accordance with an exemplary embodiment of the invention.

FIGS. 6A-6E are views illustrating an exemplary container assembly with contents adapted for insertion in a given rod segment of the rod assembly, in accordance with an exemplary embodiment of the invention.

FIG. 7 illustrates a rod assembly for a fuel bundle in accordance with another exemplary embodiment of the invention.

FIGS. 8A-B are views illustrating an adaptor subassembly for the rod assembly in accordance with another exemplary embodiment of the invention.

FIGS. 9A-B are views illustrating a mini-subassembly for the rod assembly in accordance with another exemplary embodiment of the invention.

FIGS. 10A-B are views illustrating an upper end plug adaptor for the rod assembly in accordance with another exemplary embodiment of the present invention.

FIGS. 11A-B are views illustrating an lower end plug adaptor for the rod assembly in accordance with another exemplary embodiment of the present invention.

FIGS. 12A-C are views illustrating an adaptor subassembly for the rod assembly in accordance with another exemplary embodiment of the invention.

FIG. 13 illustrates a section of a boiling water reactor core.

FIG. 14 illustrates a cross-sectional view of a fuel bundle.

### DETAILED DESCRIPTION OF THE EXEMPLE EMBODIMENTS

Example embodiments will now be described more fully with reference to the accompanying drawings. However, example embodiments may be embodied in many different forms and should not be construed as being limited to the example embodiments set forth herein. Example embodiments are provided so that this disclosure will be thorough, and will fully convey the scope to those who are skilled in the art. In some example embodiments, well-known processes, well-known device structures, and well-known technologies are not described in detail to avoid the unclear interpretation of the example embodiments. Throughout the specification, like reference numerals in the drawings denote like elements.

It will be understood that when an element or layer is referred to as being "on", "connected to" or "coupled to" another element or layer, it may be directly on, connected or coupled to the other element or layer, or intervening elements or layers may be present. In contrast, when an element is referred to as being "directly on," "directly connected to" or "directly coupled to" another element or layer, there may be no intervening elements or layers present. As used herein, the term "and/or" includes any and all combinations of one or more of the associated listed items.

It will be understood that, although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Thus, a first element, component, region, layer or section discussed below could be termed a second element, component, region, layer or section without departing from the teachings of the example embodiments.

Spatially relative terms, such as "beneath", "below", "lower", "above", "upper" and the like, may be used herein for ease of description to describe one element or feature's relationship to another element(s) or feature(s) as illustrated in the figures. It will be understood that the spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

The terminology used herein is for the purpose of describing particular example embodiments only and is not intended to be limiting. As used herein, the singular forms "a", "an" and "the" may be intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

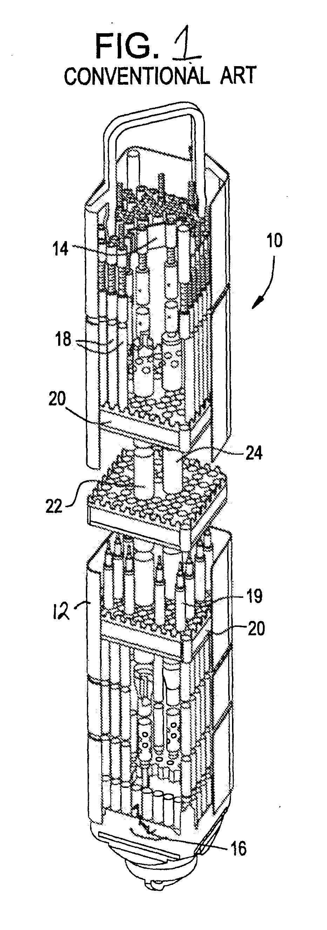

FIG. 1 illustrates an exemplary fuel bundle of a nuclear reactor such as a BWR. Fuel bundle 10 may include an outer channel 12 surrounding an upper tie plate 14 and a lower tie plate 16. A plurality of full length fuel rods 18 and/or part length fuel rods 19 may be arranged in a matrix within the fuel bundle 10 and pass through a plurality of spacers (also known as spacer grids) 20 vertically spaced one from the other maintaining the rods 18, 19 in the given matrix thereof.

The fuel rods 18 and 19 with at least a pair of water rods 22 and 24 may be maintained in spaced relation to each other in the fuel bundle 10 by a plurality of spacers 20 provided at different axial locations in the fuel bundle 10 so as to define passages for reactor coolant flow between fuel rods 18, 19 in the fuel bundle 10. There may typically be between five to eight spacers 20 spaced along the entire axial length of the fuel bundle 10 for maintaining the fuel rods 18, 19 in the desired array thereof. Spacer 20 may be embodied as any type of spacer, for example, ferrule-type spacers or spacers of the type described and illustrated in U.S. Pat. No. 5,209,899.

In FIG. 1, the matrix may be a 10X10 array, although the illustrative fuel bundle 10 may have a different matrix array of rods 18, 19 such as a 9X9 array or an 11x11 array. The bundle 10 may include all full length fuel rods 18 and/or a combination of full 18 and part length 19 fuel rods, as is known. Each of the full length rods 18 and part length rods 19 is cladded, as is known in the art. The water rods 22 and 24 (two are shown, there may be more or less water rods in bundle 10) may be dispersed among the fuel rods 18, 19 in bundle 10, between the lower tie plate 16 and the upper tie plate 14. Each of the full length rods 18 and part length rods 19 is cladded, as is known in the art. The water rods 22, 24 serve to transfer fluid from the lower regions of the nuclear fuel bundle 10 to the upper regions, where the water is dispersed through openings located at the top of the water rods, as shown.

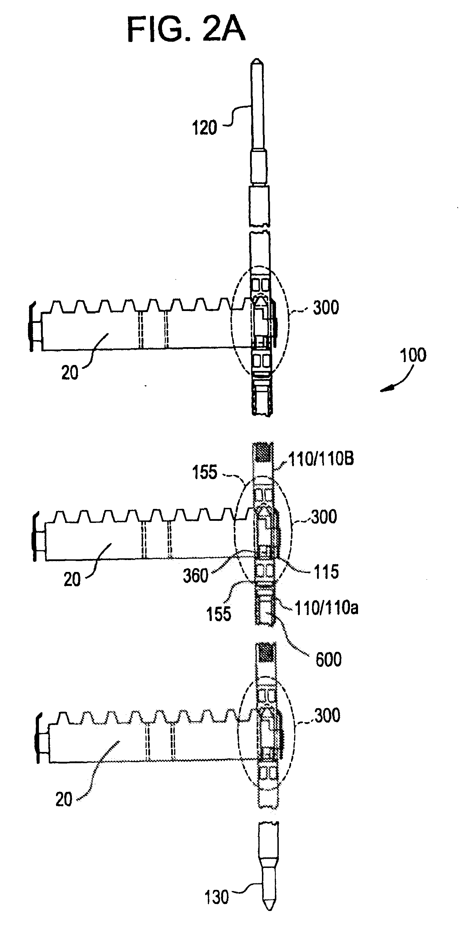

FIG. 2A illustrates a rod assembly 100 for a fuel bundle 10 in accordance with an exemplary embodiment of the invention. The rod assembly 100 (also occasionally referred to as a multi-segment rod or multi-part rod) that includes a plurality of parts or cladded rod segments 110. As shown in FIG. 2A, a rod assembly 100 may include a plurality of rod segments 110 between an upper end piece 120 and a lower end piece 130. The upper end piece 120 and lower end piece 130 may include threads to mate with the lower and upper tie plates of the fuel bundle 10 (not shown), as is known. FIG. 2A shows two adjacent rod segments 110a, 110b interconnected to each other via at least one adaptor subassembly, shown generally as a subassembly 300 within the dotted line circle of FIG. 2A. Only one rod assembly 100 is shown in FIG. 2A, it being understood that one or more of the rod assemblies 100 shown in FIG. 2A may be inserted into a fuel bundle such as the fuel bundle 10 shown in FIG. 1. Namely, one or more rod assemblies 100 may replace one or more of fuel rods 18 and 19 in FIG. 1.

Rod segments 110 may be attached between the upper and lower end pieces 120, 130 and to each other so as to form the entire axial length of the rod assembly 100. In an example, a rod segment 110a, a rod segment 110b and one each of the upper and lower end pieces 120, 130 may be connected by adaptor subassemblies 300 at connections points along the axial length of the rod assembly 100 where the rod assembly contacts spacers 20. Although only three spacers 20 and adaptor subassemblies 300 are shown in FIG. 2A for reasons of brevity, it should be understood that the fuel bundle 10 could include one or more rod assemblies 100, each having at least one rod segment 110a and at least one rod segment 110b connected by adaptor subassemblies 300 at any number of spacer 20 locations. The rod segments 110a, 110b may have a same or different length. Similarly, the adaptor subassemblies 300 may also be manufactured at a fixed or variable size.

In this exemplary embodiment, the rod segments and adaptor subassemblies are constructed of a material which is corrosion resistant and compatible with the other reactor components. An exemplary material may be a zirconium alloy, for example.

Desirably, a portion of each spacer 20 contacts the rod assembly 100 at each of the adaptor subassemblies 300 so as to substantially cover adaptor subassemblies 300 and/or connection points 115 between rod segments 110, or substantially covers an adaptor subassembly 300 or connection point 115 connecting a given rod segment 110 and one of the upper and lower end pieces 120 and 130. Accordingly, the consequences of fretting may be eliminated. While fretting may still occur, the fretting wear on the rod assembly 100 occurs on the adaptor subassembly 300, instead of on a segment 110a, b. Accordingly, this may eliminate potential release of contents from within a given rod segment 110 to the reactor coolant.

FIG. 2A illustrates an exemplary adaptor subassembly 300 between adjacent rod segments 110a and 110b in transparent detail (i.e., phantom lines illustrate components within rod segments 110 and/or adaptor subassemblies 300) so as to show weld points 155 between an adjacent rod segment 110b and a part of the adaptor subassembly 300. FIG. 2A also illustrates (in phantom) a container assembly 600 provided within one or more of the rod segments 110 for applications described in detail hereafter. Not all of the rod segments 110 nor all of the rod assemblies 100 will generally include a container assembly 600 therein as described in detail below. Additionally, in FIG. 2A, there is illustrated an undercut portion or recessed break line 360. As will be described in further detail below, the recessed break line 360 provides an alternative location to break a particular adaptor subassembly 300/rod segment 110 in order to remove a particular rod segment 110 from the rod assembly 100, which may be desirable to reduce length in transport, etc., for example.

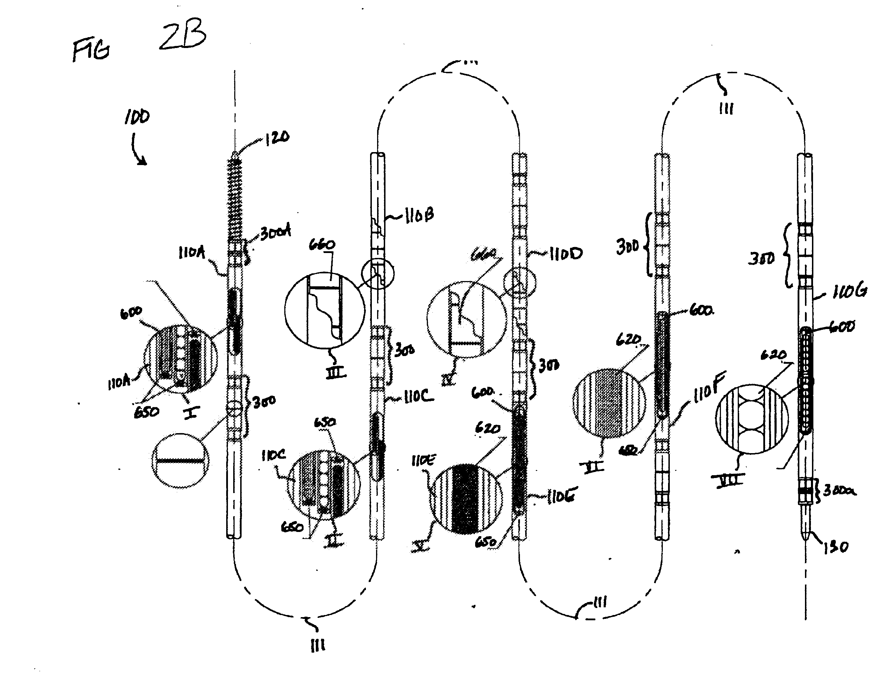

Next, the structures associated with the multi-segment fuel rod 100 to produce radioactive isotopes will be described with respect to FIG. 2B. As shown in FIG. 2B, which illustrates an example multi-segment fuel rod 100 of FIG. 2A.

The multi-segment fuel rod 100 is broken up into various segments 110A, 110B, 110C, 110D, 110E, 110F and 110G that connect to each other via a corresponding adaptor subassembly 300 at connection points 115 (as previously shown) to form a contiguous multi-segmented fuel rod 100 (as evident by the dotted connection lines 111 in FIG. 2B). FIG. 2B also illustrates enlargements of cross-sectional views I-VII of the target container 600 in each of segments 110A, 110C, 110E, 110F and 110G of the multi-segmented rod 100.

Views I and II show a plurality of containment structures 600 within rod 100 that are housing multiple different targets, shown as a liquid, solid and gas isotope target 620 within a single rod segment 110A. Further, enlargements I and II illustrate indicia 650 that can be placed on the containment structures 600 within a given rod segment 110A, 110C, 110E, etc. As shown, the indicia 650 can indicate whether or not the isotope target is in solid, liquid or gas form, and can also provide the name of the target isotope and/or the name of the isotope to be produced due to irradiation, for example (not shown in FIG. 2B for purposes of clarity).

Rod segments 110B and 110D are shown to contain nuclear fuel 660, as shown in enlargements III and IV, for example. Of course in an alternative, the multi-segment rod 100 can be composed of a plurality of rod segments 110 in which no segment 110 includes nuclear fuel, or no segment 110 includes a target container or assembly container 600 as previously described. Enlargement V of rod segment 110E illustrates a container assembly 600 which includes a target that is in gaseous form. Enlargement VI of rod segment 110F illustrates a container assembly 600 within the rod segment 110F that includes a target 620 in liquid form. Enlargement VII of rod segment 110G illustrates a container assembly 600 which includes a solid target 620, shown as a single column of Co-59 BBs, which can be irradiated to produce the desire isotope, in this case, Co-60. Each of the container assemblies 600 can thus be prepackaged with the target 620 isotope material in solid, liquid or gas form, for insertion into a corresponding rod segment 110 of the multi-segmented rod 100, for example. As will be appreciated any of the radioactive isotopes discussed in the Background of the Invention section may be produced, and that the present invention is not limited to these isotopes.

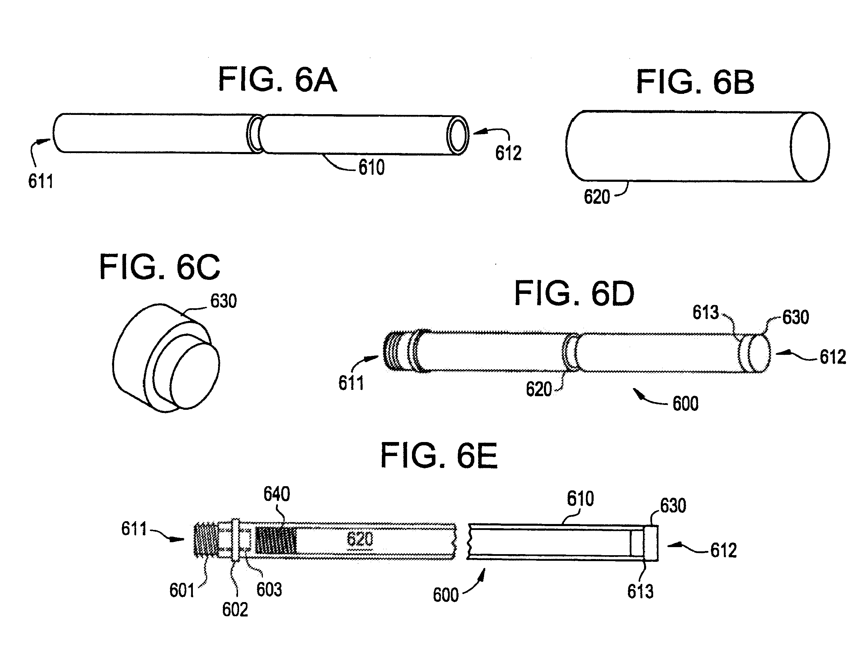

Further, since each of the container assemblies 600 are sealed by end plugs 630 at one end 612 and by exterior threads 601 and an O-ring 602 at the first end 611 (as will be shown in FIGS. 6A, 6D and 6E), the removal of a particular segment 110 at its connection point 115 (i.e., at the disconnection of the adapter subassembly 300 at connection point 115 between two segments 110) will not cause a breach which would expose the irradiation target 620 to the reactor coolant resulting in costly irradiation target removal from the nuclear reactor. Thus, the container assembly 600 together with the outer cladding of the rod segment 110 provides a double-walled containment for the irradiation target 620.

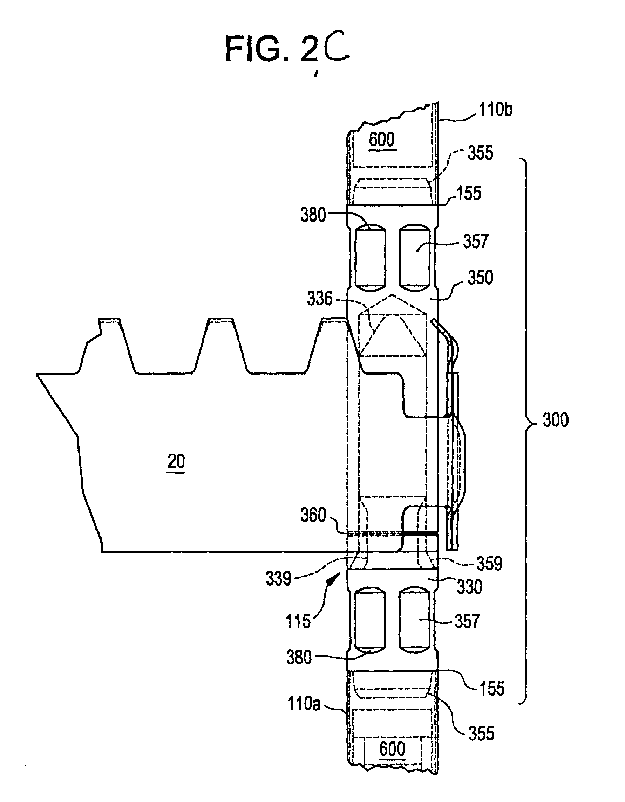

FIG. 2C illustrates an exploded view of a portion of FIG. 2A to illustrate the rod assembly in further detail. Portions of FIG. 2B are also shown in phantom (dotted lines) to indicate components within an interior of a rod segment 110a, 110b or subassembly 300. The adaptor subassembly 300 may include a male adaptor plug 330 that is attached to a rod segment 110a via a weld at weld joint 155. Similarly, the adaptor subassembly 300 may include a female adaptor plug 350 which may be attached at one end to a rod segment 110b via a weld at weld joint 155. Both the male and female adaptor plugs 330, 350 may include a plurality of nut-shaped depressions 357 around an outer circumference thereof. In general, the depressions 357 may facilitate removal/disassembly of a given rod segment 110, upper end piece 120 or lower end piece 130 by a wrench-like suitable tool during a maintenance outage, for example.

In FIG. 2C, the depressions 357 may include recessed angled surfaces at opposite ends thereof, such as angle edges 380, to prevent damage to the spacer 20 during rod insertion or assembly of the rod assembly 100 into the fuel bundle 10 of the reactor. Further, as shown in dotted line form, each of the male and female adaptor plugs 330 and 350 may include weld alignment members 355 to facilitate inserting the corresponding adaptor plug 330, 350 into an end of a given rod segment 110 for welding the plug 330/350 to the segment 110 at the weld joint 155.

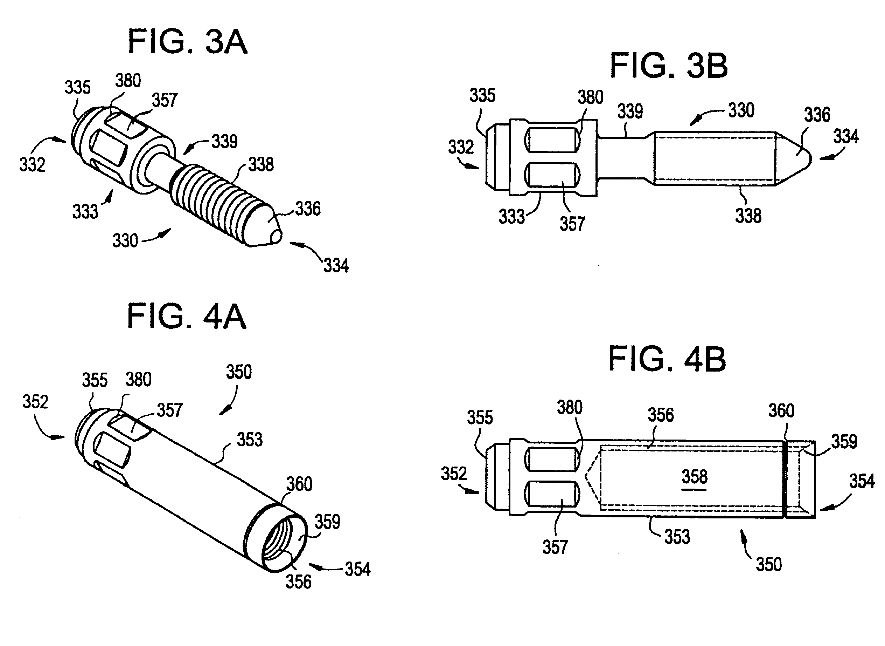

FIGS. 3A and 3B are perspective and side-view profiles illustrating part of an adaptor subassembly for the rod assembly in accordance with an exemplary embodiment of the invention. As shown in FIGS. 3A and 3B, male adaptor plug 330 may be attached (such as by a weld) to rod segment 110 at a first end 332. A second end 334 of male adaptor plug 330 may be inserted into a corresponding chamber or cavity of the female adaptor plug 350. The male adaptor plug 330 may include the aforementioned weld alignment member 335 as part of a cylindrical section 333, which includes the nut-shaped depressions 357 around the circumference thereof with angled edges 380. An intermediate member 339 connects the cylindrical section 333 to an elongate section 338. The elongate section 338 may be threaded, as shown in FIG. 3A. The elongate section 338 tapers into a generally cone-shaped end 336 at the male adaptor plug second end 334. The cone-shaped end 336 represents a self-alignment aid for connecting the female adaptor plug 350 to the male adaptor plug 330 as a single adaptor subassembly 300.

The male adaptor plug 330 may be made of a material that is corrosion resistant and compatible with the other reactor components, such as a zirconium alloy, as is known in the art.

FIGS. 4A and 4B are perspective and side-view profiles illustrating another part of the adaptor subassembly in accordance with an exemplary embodiment of the present invention. As shown in FIGS. 4A and 4B, female adaptor plug 350 has a first end 352 for attachment to a given rod segment 110 (not shown) and a second end 354 for receiving the cone-shaped end 336 and elongate member 338 of the male adaptor plug 330 therein. Female adaptor plug 350 may include weld alignment member 355 and a generally cylindrical section 353, which has a plurality of nut-shaped 357 depressions around the circumference with angled edges 380 at the first end 352 to facilitate removal of the female adaptor plug 350 and/or removal of an adjacent rod segment.

The female adaptor 350 includes an interior cavity 358. A surface of the cavity 358 may include a plurality of mating threads 356 for receiving corresponding threads (see FIG. 3A) on the elongate section 338 of the male adaptor plug 330. The cavity 358 may have a concave angled portion 359 at an end thereof that is configurable as a self-alignment aid for receiving the cone-shaped end 336 to connect male adaptor plug 330 within the female adaptor plug 350.

As shown in FIG. 4B, the cylindrical section 353 of the female adaptor plug 350 may include a recessed break line 360 at second end 354. The recessed break line 360 may also be referred to as an undercut section, for example. Undercutting may be designed into each of the adaptor subassemblies 300 so that a given rod segment 110 may be safely broken down by snapping and/or cutting a section loose without unscrewing the connecting joints 115 of FIG 2B. This will be illustrated in further detail below.

In another aspect, as the threads of the elongate section 338 engage the corresponding mating threads 356 within the cavity 358 of the female adaptor plug 350, the recessed break line 360 aligns with the intermediate member 339 of the male adaptor plug 330. Since the diameter of the intermediate member 339 is less than a diameter of the cylindrical section 333, this represents a 'weakened area' that facilitates cutting, snapping or breaking of the adaptor subassembly 300 of FIG. 2B at that location. The recessed break line 360 may thus provide a visual identification as to where to cut an adaptor subassembly 330 of FIG. 3B, in the event of segment 110 of FIG. 2B replacement, adaptor subassembly 300 of FIG. 2B replacement, etc.

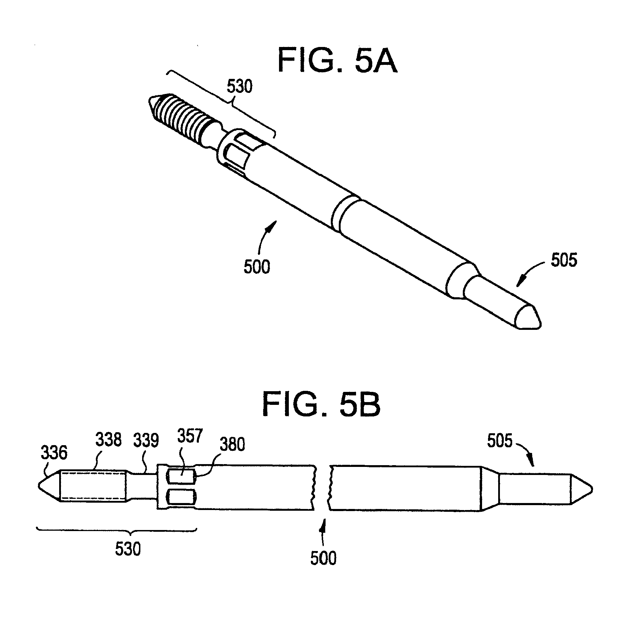

FIGS. 5A and 5B are perspective and side-view profiles illustrating an exemplary lower end piece of the rod assembly in accordance with an exemplary embodiment of the invention. As shown in FIGS. 5A or 5B, one or both of the upper and lower end pieces 120 and 130 of FIG. 2A may be formed as a solid end piece assembly 500. The solid end piece assembly may be made of a solid metal material for example. End piece assembly 500 may include an end plug portion 505 at one end thereof and may have an integral end piece adaptor subassembly 530 at another end thereof for threaded engagement with a corresponding female adaptor segment 350 of FIG. 4B within an adjacent rod segment 110 of FIG. 2B.

The end piece assembly 500 may be fabricated of solid Zircaloy and does not necessarily have any nuclear fuel (enriched uranium) or poisons (gadolinium) loaded therein, since axial flux near the top and bottom of a fuel bundle such as fuel bundle 10 of FIG. 1 is generally substantially lower than between the upper and lower end pieces 120 and 130 of FIG. 2A, for example. FIGS. 5A and 5B thus may illustrate a reusable end plug (reusable as either an upper end piece or lower end piece) that can be removed with relative ease from an adjacent segment 110 of FIG. 2B of the rod assembly 100 of FIG. 2A during a scheduled maintenance outage.

FIGS. 6A-6E are views illustrating an exemplary container assembly with contents adapted for insertion in a given rod segment 110 of the rod assembly 100 of FIG. 2A-2C, in accordance with an exemplary embodiment of the invention.

In an exemplary embodiment of the present invention, various ones of the rod segments 110 may include a container assembly 600 therein, as shown previously in FIGs. 2A-2C. In an example, the container assembly 600 may house or contain selected contents. An example of such contents may be one or more irradiation targets that produce one or more desired isotopes when a fuel bundle containing the rod assembly 100 is irradiated in the core of the reactor. One or more rod segments 110 of the rod assembly 100 may each include the same target, different targets or multiple irradiation targets, for example.

Referring to FIGS. 2A-2C, in one exemplary aspect of the invention, at least one of the rod segments 110 of rod assembly 100 includes a container assembly 600 therein, and none of the other rod segments 110 of rod assembly 100 (nor either of the end pieces 120, 130) contain any nuclear fuel/poisons. In another aspect, one or more of the rod segments 110 of rod assembly 100 may include desired enrichments of uranium and/or concentrations of gadolinia. The locations and concentrations may be based on the desired characteristics of the bundle 10 for a planned energy cycle, for example. A rod segment 110 that includes an irradiation target may not include nuclear fuel, although adjacent rod segments 110 could include nuclear fuel therein.

Referring now to FIGS. 6A-6E, the container assembly 600 shown initially in FIGS. 2A-2C may include a container 610 that houses an irradiation target 620 therein. The container 610 may be closed at one end 611, open at the other end 612 and may include a seal 613 to close the container by a suitable end cap 630, as shown in FIG. 6D, although end caps 630 may be provided at both ends. Although container 610 is shown as having a generally cylindrical shape, container 610 may be oriented in any geometrical shape so long as the largest diameter of the shape is less than the inner diameter of rod segment 110. Container 610 may be made of a suitable material such as zirconium alloys, for example.

Container 610 may house one or more irradiation targets 620. The irradiation target 620 shown in FIG. 6B is illustrated in a generally cylindrical form or shape. However, the irradiation target 620 may be embodied as a solid, liquid and/or gas, and may take any geometry so long as the diameter of the geometry is small enough to fit inside the container 610 (less than an inner diameter of the container 610) within a given rod segment 110. The container 610, coupled with its cladded rod segment 110, therefore provides a double-walled containment for the irradiation target 620 when disposed in the rod segment 110.

FIG. 6E illustrates a transparent front or side view of container assembly 600, to show the container 610 housing the irradiation target 620 therein and sealed by the end plug 630 at location 613. Optionally, an interior of the container 610 may include a spring 640 to provide a counter force against irradiation target 620 when sealed by end plug 630. The end plug 630 may be attached to the container 610 by suitable attachment means, i.e., weld, threaded engagement, friction connection, etc.

In another aspect, the container 600 houses irradiation target 620 therein, having a first end 611 that has a pilot hole 603 for removing the irradiation target 620 after irradiation. The first end 611 may include exterior threads 601 and an O-ring 602 that is used for sealing container 600 when inserted into a piece of equipment. Pilot hole 603 has interior threads to aid in the removal of container 600 from the rod segment 110.

The irradiation target 620 may be a target selected from the group of isotopes comprising one or more of cadmium, cobalt, iridium, nickel, thallium, thulium isotope, for example, or any other isotope having an atomic number greater than 3. For example, the target may be cobalt-59, which when irradiated in the nuclear reactor for a period of time becomes cobalt-60. Desirably, a given segment 110 and/or container assembly 600 may include indicia or indicators thereon to indicate what irradiation target 620 is loaded in that rod segment 110/container 600, for example, and/or what isotope is to be produced from that target. The specific methodology in which one or more of the rod assemblies 100 containing irradiation targets is irradiated within a fuel bundle (such as fuel bundle 10 of FIG. 1) of a nuclear reactor to generate one or more desired isotopes is described in more detail in the co-pending and commonly assigned application No. 11/002,680 entitled "Methods of Producing Isotopes in Power Nuclear Reactors", Atty. Docket No. 158486-1, incorporated by reference in its entirety herein. Therefore, a detailed discussion of these processes is omitted herein for purposes of brevity.

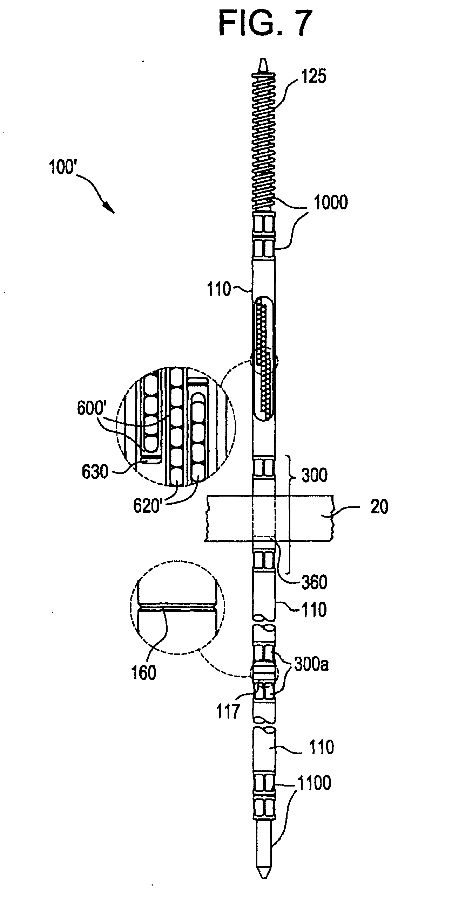

FIG. 7 illustrates a rod assembly for a fuel bundle in accordance with another exemplary embodiment of the invention. FIG. 7 illustrates a rod assembly 100' in accordance with another exemplary embodiment of the present invention. In FIG. 7, only a few rod segments 110 of the rod assembly 100' are shown for purposes of brevity, it being understood that the rod assembly 100' could include additional rod segments 110 and spacers 20. In an example, the fuel bundle 10 may include eight spacers 20 with various sized (different length) rod segments 110 attached to the upper and lower end pieces 120 and 130 (as shown in Figure 2A) with an expansion spring 125 attached atop the upper end piece 120, as is known in the art.

Unlike FIG. 2A, in FIG. 7 various sized adaptor 'mini-subassemblies' 300a may be provided at various locations such that connection points between two adjacent rod segments 110 do not occur at the spacer location (i.e., at spacer 20). FIG. 7 also illustrates an undercut section 160 (segmented break line 360 in FIG. 2C) as well as a container assembly 600' in further detail. As it may be desirable to have additional locations to more easily remove rod segments 110 which include a container assembly 600' therein (for removal of the container assembly 600' and shipping to a desired customer), the rod assembly 100' may include different length adaptor subassemblies 300, such as mini-subassemblies 300a and extended sub-assemblies to use between adjacent rod segments 110 of different lengths, for example. One or more of the rod assemblies 100' shown in FIG. 7 may be inserted into a fuel bundle such as the fuel bundle 10 shown in FIG. 1. Additionally, a rod assembly 100 or 100' could have both adaptor subassemblies 300 at spacer 20 locations as well as one or more mini-subassemblies 300a between spacers 20 for connecting adjacent rod segments 110, and/or for connecting a rod segment 110 to one of an upper or lower end piece 120, 130 (as shown in FIG. 2A) or one of an upper end piece assembly 1000 and a lower end piece assembly 1100 as shown in FIG. 7.

As also shown in FIG. 7, a given rod segment 110 may include multiple container assemblies 600' therein. In FIG. 7, the container assembly 600' may include a plurality of irradiation targets in "BB" form, which is another alternative form for the irradiation target in accordance with the present invention.

Accordingly, as shown in FIG. 7, the rod assembly 100' may include various sized adaptor mini-subassemblies 300a which may be used in addition to the fixed-size adaptor subassembly 300 described in FIG. 2A. This may produce a single multi-joint rod assembly 100' that has more than one usage. This utilizes varying levels of neutron flux in the reactor for variations in the degree of isotope production in the target.

As an example, the rod assembly 100' may contain a plurality of irradiation targets at various locations within different sized rod segments 110, and still maintain the same length of a standard full length fuel rod 18 or part length rod 19 within the fuel bundle 10 of FIG. 1, and/or provide a rod assembly 100' having the same length as a part length rod within fuel bundle 10 of FIG. 1, for example. Different rod segments 110 of the rod assembly 100' may be removed and/or reconnected at different connection points along the axially length of the rod assembly 100'. A given rod segment 110 and/or adaptor mini-subassembly 300a may be removed by unscrewing, cutting and/or snapping or breaking a specific section loose at its connecting point or at the undercut section 160, for example.

Additionally as shown in FIG. 7, irradiation targets 620 may be placed in prepackaged container assemblies 600' that may facilitate shipping directly from the reactor site to the receiving customer. Such prepackaged containers 600' may contain different irradiation target materials, whether the target isotopes are in solid, liquid or gas form and placed inside a rod segment 110.

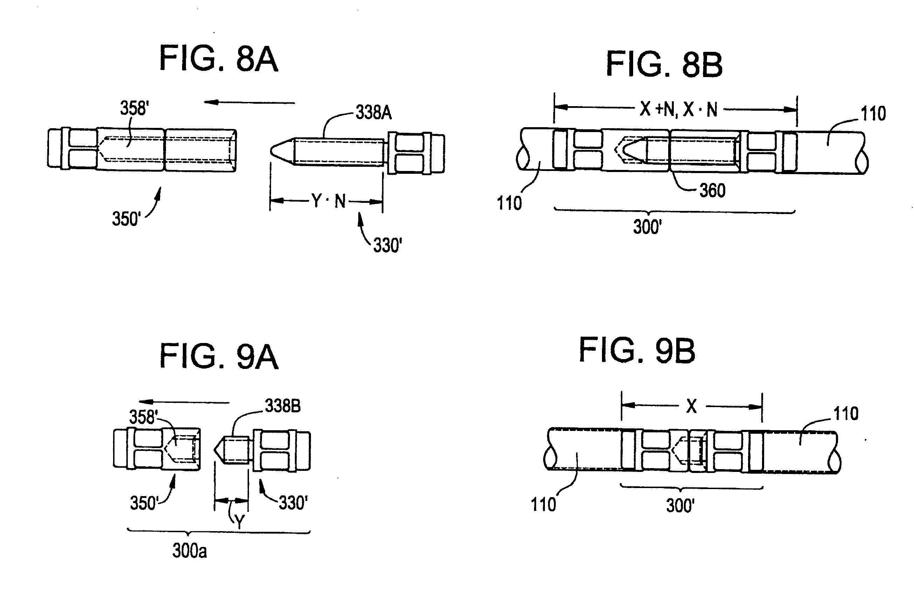

FIGS. 8A-8B are views illustrating an adaptor subassembly for the rod assembly in accordance with another exemplary embodiment of the invention; and FIGS. 9A-9B illustrate the mini-subassembly 300a in further detail. FIG. 8A shows a male adaptor plug 330' and a direction of insertion into the female adaptor plug 350'. FIG. 8B illustrates the connective engagement between male and female adaptor plugs 330', 350' as part of an exemplary adaptor subassembly 300'.

FIGS. 8A and 8B illustrate a longer-length adaptor subassembly 300' than is shown in FIGS. 3A- 3B and FIGS. 4A-4B, or in FIGS. 9A-9B. For example, the longer elongate section 338A of the longer male adaptor segment 330' may provide an adaptor subassembly 300' which enables connection of a smaller length section of rod segment 110 to be interchangeable with a much longer/heavier rod segment 110, should the need arise. In FIG. 8A, the length of the longer elongate section 338A is indicated as "y * n" so as to distinguish it from the length of the shorter elongate section 338B in the mini-subassembly 300a of FIG. 9A. Similarly, the overall length of the adaptor subassembly 300' in FIG. 8B may be longer than the corresponding mini-subassembly 300a in FIG. 9B by an integer multiple n, or by an addition of an integer n to the length 'x' of mini-subassembly 300a in FIG. 9B.

The smaller, two-piece mini-subassembly 300a of FIGS. 9A-B may be used in between spacer 20 (shown in Figure 1) locations for producing even smaller subassemblies of rod segments 110. The smaller two piece adaptor mini-subassembly 300a of FIG. 9B may be used in the same rod assembly 100' (shown in Figure 7) as the larger two piece adaptor subassembly 300' shown in FIG. 8B, for example.

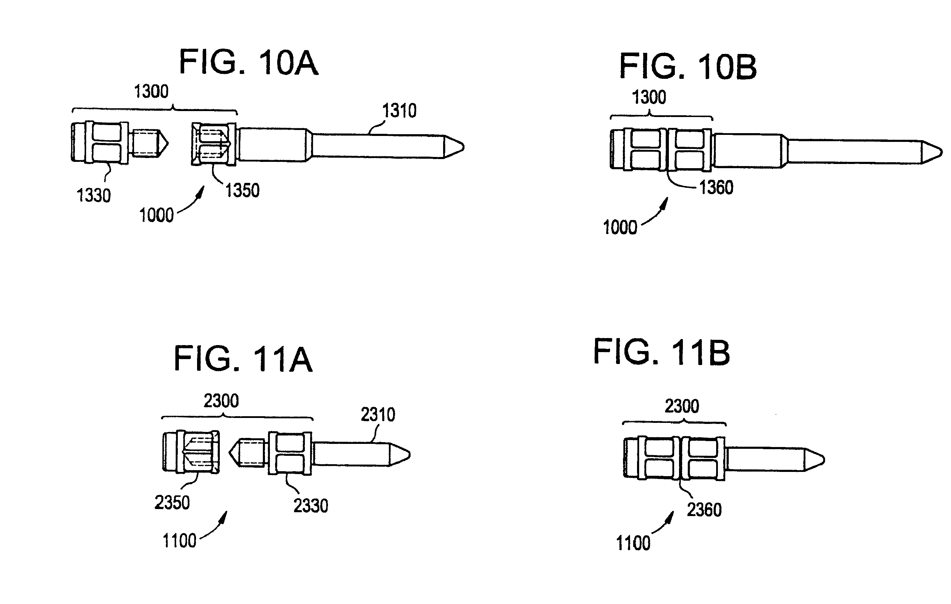

FIGS. 10A-B are views illustrating an upper end piece adaptor for the rod assembly in accordance with another exemplary embodiment of the present invention. FIGS. 11A-B are views illustrating a lower end piece adaptor for the rod assembly in accordance with another exemplary embodiment of the present invention.

FIGS. 10A-11B illustrate alternative embodiments to the end piece assembly 500 shown in FIGS. 5A and 5B. FIGS. 10A and 10B illustrate an upper end piece assembly 1000. The upper end piece assembly 1000 may include an upper end piece adaptor subassembly 1330 at one end and the upper end piece 1310 connected thereto at another end, which may contain threads. Unlike the integral end piece assembly 500 shown in FIGS. 5A and 5B, in FIGS. 10A and 10B, the upper end piece 1310 is attached to a female adaptor plug 1350 similar to the female adaptor plug 350 as described in FIGS. 4A and 4B. The female adaptor plug 1350 may be engaged to the male adaptor plug 1330 such as previously described above in FIGS. 3A-3B. The upper end piece subassembly 1000 allows a full length rod from its upper end piece 1310 down to its bottom end piece 2310 to be built by mixing and matching different lengths of rod segments 110 to different connection points within the same axial length of the rod assembly 100'.

Similarly, in FIGS. 11A and 11B, a lower end piece assembly 1100 may include a lower end piece adaptor subassembly 2300 connected to the lower end piece 2310. In particular, the lower end piece 2310 is attached to the male adaptor plug 2330, which mates with a female adaptor plug 2350 that is attached to an adjacent rod segment 110, for example. In an aspect, the lower end piece may be used after the removal of a lower section of a rod segment 110, so that the remaining axial length of the rod assembly 100' can remain within the bundle 10 for additional cycles using the detachable lower end piece assembly 1100.

Accordingly, the upper end piece assembly 1000 and lower end piece assembly 1100 provide reusable and removable lower and upper end pieces which can facilitate quick repairs or removal of designated rod segments 110 within the rod assembly 100'.

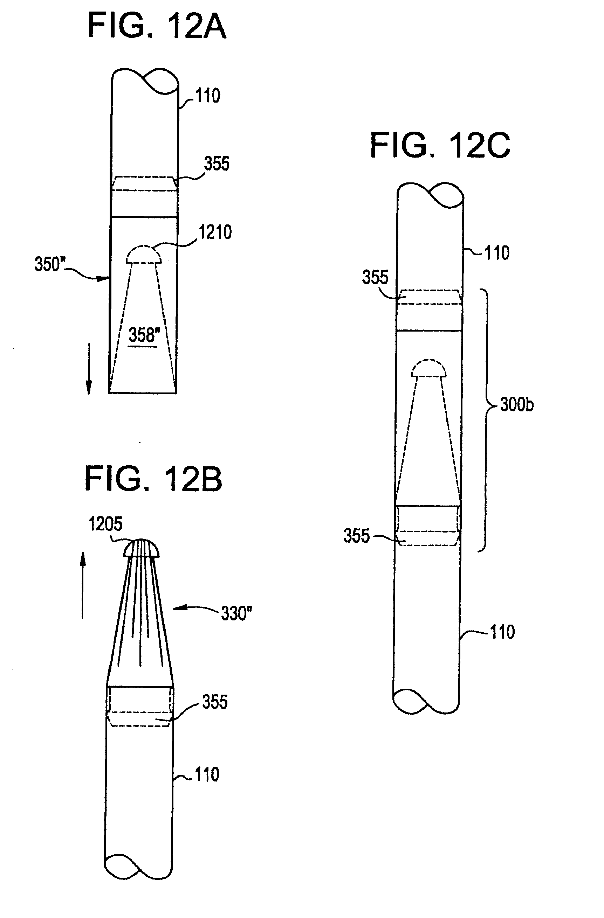

FIGS. 12A-C are views illustrating an adaptor subassembly for the rod assembly in accordance with another exemplary embodiment of the invention. In general, adaptor subassembly 300b may be understood as a push-snap locking mechanism having a male connector 330" engaging a corresponding female connector 350" to connect two rod segments 110 or a rod segment 110 with one of the upper and lower end pieces 120/130 of FIG. 2A. The male connector 330" may include an expandable member at an end thereof, and the female connector 350" may include an interior cavity terminating in a receiver 358" that is adapted to receive the expandable member.

FIGS. 12A and 12B illustrates a male connector 330" and female connector 350" and direction of connective engagement between the two connectors 330", 350". As shown in FIG. 12B, the male connector 330" may include a weld alignment member 355 (such as shown in FIG. 2C) to assist in aligning the male connector 330" within the interior of its corresponding rod segment 110. The other end of the male connector 330" may include a spring plug bayonet 1205 for connective engagement within an interior cavity 358" to terminate once fully engaged within a corresponding ball and socket joint fit-up 1210 of the female connector 350".

FIG. 12A illustrates a female connector 350" with the interior cavity 358" that may be shaped so as to receive the spring plug bayonet 1205 within the corresponding ball and socket joint fit-up 1210, as shown in FIG. 12A. FIG. 12C illustrates the connective engagement between the female 350" and male 330" connectors of connector subassembly 300b. Accordingly, the rod segments 110 may be fully assembled into a singular rod assembly 100/100' once the expandable bayonet plug spring collet 1205 is fixedly secured within the ball and socket joint fit-up 1210 of the female connector 350".

Accordingly, the adaptor subassembly 300b in FIGS. 12A, 12B and 12C illustrate a push-snap mechanism to connect adjacent rod segments 100 of the rod assembly 100/100' and may reduce the sticking probability that could occur using the threaded engagement as shown in FIGS. 2A, 2C and 7. This may lead to fast assembly and/or disassembly of various rod segments 110, without the need for breaking, snapping, or cutting the segments 110 apart, for example.

As previously described, each of the rod segments 110 may have identification marks or indicia thereon that identify the contents that are within that particular rod segment 110. Alternatively, the identification marks can be labeled on the container assemblies 600/600' within a given rod segment 110, for example.

In another aspect, the threaded screw length of the elongate sections 338/338A/338B of FIGS 8A-B and 9A-B on a given male adaptor plug 330 may be of a sufficient length so that a given rod segment cannot become unscrewed during a reactor operation. As an example, the threaded screw length of the elongate sections 338/338A/338B may be long enough such that it cannot come apart. This may help to ensure that a given rod length would not become unscrewed during reactor operation.

In a further aspect, male adaptor plugs 330 and 330', and/or male connector 330" may be oriented in the same direction for ease of extraction of a given rod segment 110. For example, segments 110 having male adaptor plugs 330, 330' and/or 330" may all be loaded and/or arranged in a given rod assembly 100/100' so that the male adaptor plugs/connector 330, 330', 330" of the segment 110 extend vertically upward toward the top of bundle 10, to facilitate grasping by a suitable tool for removal, installation, for example. In the event the rod segment 110 is dropped, it would land with side having the female adaptor plug 350, 350' and/or 350" down, so as to reduce the chance that the male end snaps or breaks.

For the purposes of the following discussion, fuel rods containing isotope targets for isotope production will be referred to as isotope production rods even though these rods may contain nuclear fuel, and the fuel rods that do NOT contain isotope targets will simply be referred to as fuel rods. Furthermore, the isotope production rods are not limited to those embodiments discussed above; instead any isotope production rod that may replace a fuel rod in a fuel bundle may be used. For example, the isotope production rods disclosed in U.S. Application No. Unknown, filed Unknown (and entitled "CROSS-SECTION REDUCING ISOTOPE CANNISTER" by the inventor of the subject application, hereby incorporated by reference in its entirety, may be used.

Next, placement of isotope production rods within a fuel bundle according to embodiments of the present invention will be discussed.

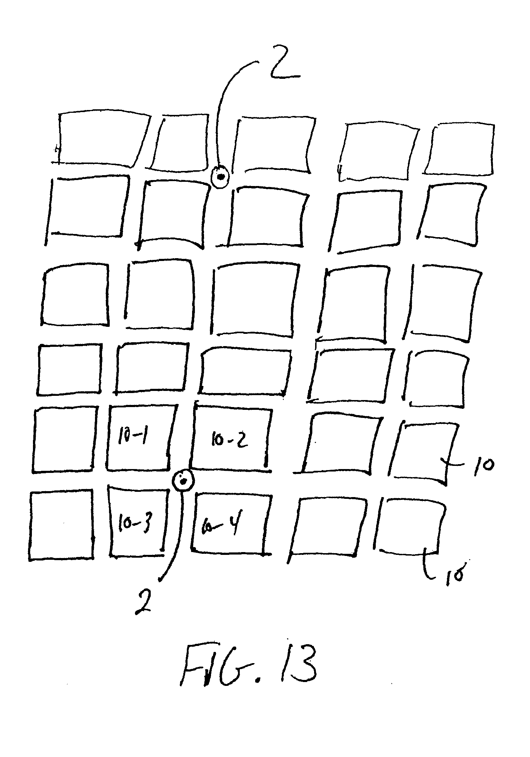

FIG. 13 illustrates a section of one quadrant of a boiling water reactor core. As shown, a plurality of fuel bundles 10, such as shown in Fig. 1, are arranged in an array. Positioned at selected corners of fuel bundles 10 are core-monitoring instruments 2. The core monitoring instruments 2 may measure gamma radiation within the core. For example, one of the core-monitoring instruments 2 may be a gamma detector such as a gamma traversing in-core probe (TIP) well-known in the art.

Studies have shown that the fuels rods in the vicinity of the core-monitoring instruments 2 are the largest contributors to the response of these instruments. Accordingly, in a first embodiment of the present invention, the isotope production rods are positioned as far as practical from the core-monitoring instruments 2. By positioning the isotope production rods away from the core-monitoring instruments 2 according to this first embodiment, the gamma particles produced by the isotope must attenuate through the material between the isotope and the core-monitoring instruments 2. As a result, the isotope production rods will have the least affect on the core-monitoring instruments 2 and help prevent inaccurate readings.

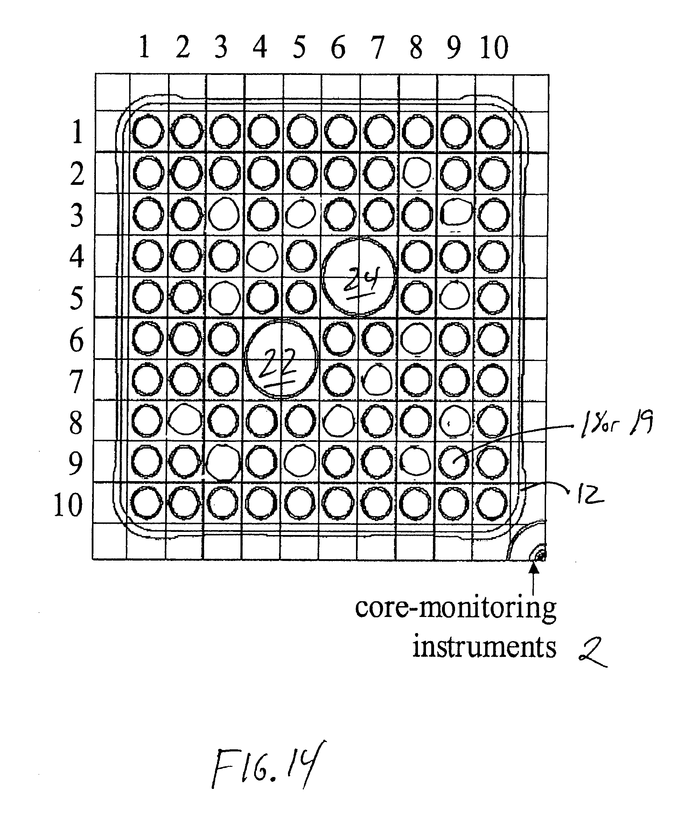

FIG. 14 illustrates a cross-sectional view of a fuel bundle. In particular, FIG. 14 may represent fuel bundle 10-1 in FIG. 13. The possible positions of the fuel rods (e.g., fuel rods 18 and/or 19) and isotope production rods (e.g., rods 100) have been designated with coordinates as shown in FIG. 14. It should be understood that the coordinate (10,10) will be the rod position at the corner of the fuel bundle 10 closest to the core-monitoring instruments 2 regardless of the orientation of the fuel bundle with respect to the core-monitoring instruments 2. In other words, while the (10,10) rod position is the lower right corner for fuel bundle 10-1, the (10,10) rod position is the lower left corner for fuel bundle 10-2, is the upper right corner for the fuel bundle 10-3 and is the upper left corner for the fuel bundle 10-4.

In keeping with the first embodiment, a first rod position filled with an isotope production rod is the (1,1) rod position. After that positions in rows 1 and 2 and columns 1 and 2 may be filled, keeping a maximum distance possible from the core-monitoring instruments 2 near the (10, 10) position.

However, distance from the core-monitoring instruments 2 is not the only consideration. In other embodiments, isotope production considerations may be accounted for in addition to or alternatively to this core-monitoring instrument consideration. The isotope production considerations include the type of radioactive isotope being produced, the half-life or length of decay of the radioactive isotope, the neutron absorption rate of the target isotope to produce the radioactive isotope, the desired specific activity of the radioactive isotope being produced, the amount of neutron flux in different areas of the fuel bundle, the duration that the target isotope/radioactive isotope is expected to remain in the reactor until removed (i.e., harvested), etc. Namely, the above described factors determine the amount of the radioactive isotope having desired characteristics produced until the radioactive isotope is removed from the reactor (i.e., harvested).

The affect of the isotope production considerations will be more readily understood by discussing some examples. In particular, the production of cobalt-60 from cobalt-59 will be discussed followed by a discussion of producing iridium-192 from iridium-191. However, it will be understood that the present invention is not limited to these two examples.

In the case of cobalt-60, the half-life or length of decay is quite long, 5.27 years. Also, the cross-section of cobalt-59 is relatively small at 19 barns, and therefore, cobalt-59 is a slow absorber of neutrons. Still further, most medical uses of cobalt-60 prefer higher specific activity, which is achieved by greater neutron absorption. In view of these absorptions factors, a larger amount of cobalt-60 with high specific activity will be produced by placing cobalt-59 in the highest areas of neutron flux for the longest time practical. For example, the time between reactor shutdowns, and therefore the time between possible harvesting of the isotope production rods, is generally 1-2 years. Given these isotope production considerations, it is expected that the cobalt-60 producing isotope production rods will remain in the nuclear reactor for 4-6 years if placed in areas of highest neutron flux.

As is known, neutron flux is highest at the corners of a fuel bundle and decreases radially towards the center of the fuel bundle. Therefore, given the core-monitor instrument consideration and the isotope production considerations for the production of cobalt-60, the isotope production rods are positioned as follows according to one embodiment:
for 1 isotope production rod, position at the (1,1) rod position;
for 2 isotope production rods, position at the (1,1) and either of the (10,1) and (1,10) rod positions; or positions at the (10,1) and (1,10) rod positions if bundle diagonal symmetry is preferred;
for 3 isotope production rods, position at the (1,1), (10, 1) and (1,10) rod positions;
for 4 isotope production rods, position at the (1,1), (10,1), (1,10), and either of the (2,1) and (1,2) rod positions;
for 5 isotope production rods, position at the (1,1), (10,1), (1,10), (2,1), (1,2) rod positions; etc.

As will be appreciated, the (10,10) rod position is in an area of high neutron flux, but has been avoided as a candidate for an isotope production rod because of the proximity to the core-monitoring instruments 2. However, it will be understood from FIG. 13 that not all (10,10) rod positions are near core-monitoring instruments 2. Namely, there are fuel bundles 10 that are not adjacent to core-monitoring instruments 2. As a result, the fuel bundles may fill the (10,10) rod positions (as well as related (10,2) and (2,10) positions, etc.) with isotope production rods.

Next, the case of producing nickel-63 from nickel-62 will be described. In the case of nickel-63, the half-life is very long, 92 years. However, the cross-section of nickel-62 is similar to that of cobalt-59 at 15 barns. Consequently, radial rod locations to place nickel-62 are the same as Cobalt-59 placement. However, the optimal time of irradiation to obtain maximum specific activity is approximately 35 years. Because it is not practical to irradiate fuel bundles for 35 years, the maximum fuel assembly life is desirable as the duration until harvesting. Consequently, fuel assemblies should target an 8-10 year irradiation period.

Next, the case of producing thulium-170 from thulium-169 will be described. In the case of thulium-170, the half-life is approximately 134 days. However, the cross-section of thulium-169 is much higher than the previous examples at 125 barns. This combination of absorption rate and decay rate identify the preferred configuration to be locations of high neutron flux (see cobalt-60) but irradiation lengths optimally designed for 1 year, ideal in an annual cycle refueling campaign.

Next, the case of producing iridium-192 from iridium-191 will be described. In the case of iridium-192, the half-life or length of decay is quite short, 74.2 days. Also, the cross-section of iridium-191 is relatively large at 750 barns, and therefore, iridium-191 is a fast absorber of neutrons. Still further, most medical uses of iridium-191 prefer higher specific activity, which is achieved by greater neutron absorption. As discussed above, the time between reactor shutdowns, and therefore the time between possible harvesting of the isotope production rods, is generally 1-2 years. Given the short half-life of iridium-192 and the fast neutron absorption characteristics of iridium-191, it would be preferable to harvest the iridium-192 producing isotope production rods in 4 months even if placed in a high neutron flux area of the fuel bundle. However, given the practical considerations of harvesting, it is expected that iridium-192 producing isotope production rods may remain in the nuclear reactor for 1-2 years. Accordingly, it is desirable to place the iridium-192 producing isotope production rods in the areas of the fuel bundle within lower neutron flux locations. If the iridium-192 producing isotope production rods were placed in areas of high neutron flux, then, given a 4-6 year harvesting time, very little iridium-192 would exist as most of the iridium-191 would have been converted to iridium-192 and have already decayed into other materials.

As discussed above, neutron flux is highest at the corners of a fuel bundle and decreases radially towards the center of the fuel bundle. Slightly higher than average neutron flux locations exist directly near the water rod locations because of the water rods. Therefore, given the core-monitor instrument consideration and the isotope production considerations for the production of iridium 192, the isotope production rods are positioned as follows according to one embodiment:
for 1 isotope production rod, position at either of the (3,3) and (8,8) rod position;
for 2 isotope production rods, position at the (3,3) and (8,8) rod positions;
for 3 to 6 isotope production rods, positions at the (3,3), (3,4), (4,3), (8,8), (8,7), and/or (7,8) rod positions; etc.

As will be understood from the above examples, various factors influence the placement of isotope production rods in a nuclear reactor. For instance, the isotope production rods will be positioned in areas of greater neutron flux the longer the half-life of the radioactive isotope being produced. Similarly, the isotope production rod will be positioned in areas of lesser neutron flux the shorter the half-life of the radioactive isotope being produced. However, even short half-life radioactive isotopes may have their isotope production rods positioned in areas of higher neutron flux if the expected duration the isotope production rods will remain in the nuclear reactor is commensurately as short as the half-life. Still further, even short half-life radioactive isotopes may have their isotope production rods positioned in areas of higher neutron flux if their neutron absorption rate is commensurately lower. Yet still further, it may be desirable to produce a lesser amount of the radioactive isotope in order to obtain higher specific activity in the amount of radioactive isotope produced. Accordingly, this may mitigate against placing isotope production rods in lower neutron flux areas.

The exemplary embodiments of the present invention being thus described, it will be obvious that the same may be varied in many ways. For example, while several of the relative relationships between the isotope production considerations have been explicitly mentioned above, many more will be readily apparent to those skilled in the art based on this disclosure. Such variations are not to be regarded as departure from the spirit and scope of the exemplary embodiments of the present invention, and all such modifications as would be obvious to one skilled in the art are intended to be included within the scope of the following claims.

For completeness, various aspects of the invention are now set out in the following numbered clauses:
1. A fuel bundle for a nuclear reactor, comprising:
   an outer channel;
   a plurality of fuel rods disposed in fuel rod positions within the outer channel, the fuel rods including nuclear fuel for sustaining a nuclear reaction in the nuclear reactor; and
   at least one isotope production rod, the isotope production rod including an irradiation target, the irradiation target emitting gamma particles if irradiated, and the isotope production rod disposed in one of the fuel rod positions within the outer channel based on a location that a gamma detector will be with respect to the fuel bundle when the fuel bundle is loaded into the nuclear reactor.
2. The fuel bundle of clause 1, wherein the isotope production rod is located in one of the rod positions having a maximum distance from the gamma detector.
3. The fuel bundle of clause 1, wherein the fuel bundle includes a plurality of isotope production rods, and the isotope production rods are located in the rod position such that a distance between the isotope production rods and the gamma detector is maximized.
4. A fuel bundle for a nuclear reactor, comprising:
   an outer channel;
   a plurality of fuel rods disposed in fuel rod positions within the outer channel, the fuel rods including nuclear fuel for sustaining a nuclear reaction in the nuclear reactor; and
   at least one isotope production rod, the isotope production rod including an irradiation target, and the isotope production rod disposed in one of the fuel rod positions within the outer channel based on a half-life of a radioactive isotope to be produced by irradiating the irradiation target.
5. The fuel bundle of clause 4, wherein the isotope production rod is positioned within the outer channel based on the half-life of the radioactive isotope to be produced by irradiating the irradiation target, and the duration that the isotope production rod will remain in the nuclear reactor.
6. The fuel bundle of clause 5, wherein the isotope production rod is positioned within the outer channel based on the half-life of the radioactive isotope to be produced by irradiating the irradiation target, the duration that the isotope production rod will remain in the nuclear reactor, and a neutron absorption rate of the irradiation target to produce the radioactive isotope.
7. The fuel bundle of clause 6, wherein the isotope production rod is positioned within the outer channel based on the half-life of the radioactive isotope to be produced by irradiating the irradiation target, the duration that the isotope production rod will remain in the nuclear reactor, the neutron absorption rate of the irradiation target to produce the radioactive isotope, and a desired specific activity of the radioactive isotope being produced.
8. The fuel bundle of clause 6, wherein the isotope production rod is positioned within the outer channel based on the half-life of the radioactive isotope to be produced by irradiating the irradiation target, the duration that the isotope production rod will remain in the nuclear reactor, the neutron absorption rate of the irradiation target to produce the radioactive isotope, and an amount of neutron flux in different areas of the fuel bundle.
9. The fuel bundle of clause 4, wherein the irradiation target is cobalt-59.
10. The fuel bundle of clause 9, wherein the fuel bundle includes a plurality of isotope production rods, and the isotope production rods are located at, at least one corner of the outer channel.
11. The fuel bundle of clause 9, wherein the fuel bundle includes a 10 by 10 array of fuel rod positions, the (10,10) position at a corner of the outer channel will be positioned adjacent a gamma detector, and the isotope production rods are positioned as follows:
   for 1 isotope production rod, position at the (1,1) fuel rod position;
   for 2 isotope production rods, position at one of (i) the (1,1) and either of the (10,1) and (1,10) fuel rod positions, and (ii) position at the (10,1) and (1,10) fuel rod positions;
   for 3 isotope production rods, position at the (1,1), (10, 1) and (1,10) fuel rod positions;
   for 4 isotope production rods, position at the (1,1), (10,1), (1,10), and either of the (2,1) and (1,2) fuel rod positions; and
   for 5 isotope production rods, position at the (1,1), (10,1), (1,10), (2,1), (1,2) rod positions.
12. The fuel bundle of clause 4, wherein the irradiation target is one of nickel-62 and thulium-169, the fuel bundle includes a 10 by 10 array of fuel rod positions, the (10,10) position at a corner of the outer channel will be positioned adjacent a gamma detector, and the isotope production rods are positioned as follows:
   for 1 isotope production rod, position at the (1,1) fuel rod position;
   for 2 isotope production rods, position at one of (i) the (1,1) and either of the (10,1) and (1,10) fuel rod positions, and (ii) position at the (10,1) and (1,10) fuel rod positions;
   for 3 isotope production rods, position at the (1,1), (10, 1) and (1,10) fuel rod positions;
   for 4 isotope production rods, position at the (1,1), (10,1), (1,10), and either of the (2,1) and (1,2) fuel rod positions; and
   for 5 isotope production rods, position at the (1,1), (10,1), (1,10), (2,1), (1,2) rod positions.
13. The fuel bundle of clause 4, wherein the irradiation target is iridium-191.
14. The fuel bundle of clause 13, wherein the fuel bundle includes at least one water rod located near a center of the outer channel, and the isotope production rod is located next to the water rod.
15. The fuel bundle of clause 13, wherein the fuel bundle includes a 10 by 10 array of fuel rod positions, and the isotope production rods are positioned as follows:
   for 1 isotope production rod, position at either of the (3,3) and (8,8) fuel rod position;
   for 2 isotope production rods, position at the (3,3) and (8,8) fuel rod positions; and
   for 3 to 6 isotope production rods, selectively position at the (3,3), (3,4), (4,3), (8,8), (8,7), and (7,8) fuel rod positions
16. The fuel bundle of clause 4, wherein the isotope production rod is not located at a corner of the outer channel that a gamma detector will be located near with respect to the fuel bundle when the fuel bundle is loaded into the nuclear reactor.
17. The fuel bundle of clause 16, wherein the isotope production rod is positioned within the outer channel based on the half-life of the radioactive isotope to be produced by irradiating the irradiation target, and maximizing a distance from the gamma detector.
18. An arrangement of fuel bundles, comprising:
   a gamma detector,
   at least one fuel bundle, the fuel bundle including,
   an outer channel,
   a plurality of fuel rods disposed in fuel rod positions within the outer channel, the fuel rods including nuclear fuel for sustaining a nuclear reaction in the nuclear reactor, and
   at least one isotope production rod, the isotope production rod including an irradiation target, the irradiation target emitting gamma particles if irradiated, and the isotope production rod disposed in one of the fuel rod positions within the outer channel based on a location of the gamma detector with respect to the fuel bundle.

## Claims

1. A fuel bundle for a nuclear reactor, comprising:
an outer channel;
a plurality of fuel rods disposed in fuel rod positions within the outer channel, the fuel rods including nuclear fuel for sustaining a nuclear reaction in the nuclear reactor; and
at least one isotope production rod, the isotope production rod including an irradiation target, the irradiation target emitting gamma particles if irradiated, and the isotope production rod disposed in one of the fuel rod positions within the outer channel based on a location that a gamma detector will be with respect to the fuel bundle when the fuel bundle is loaded into the nuclear reactor.

2. The fuel bundle of claim 1, wherein the isotope production rod is located in one of the rod positions having a maximum distance from the gamma detector.

3. The fuel bundle of claim 1 or claim 2, wherein the fuel bundle includes a plurality of isotope production rods, and the isotope production rods are located in the rod position such that a distance between the isotope production rods and the gamma detector is maximized.

4. A fuel bundle for a nuclear reactor, comprising:
an outer channel;
a plurality of fuel rods disposed in fuel rod positions within the outer channel, the fuel rods including nuclear fuel for sustaining a nuclear reaction in the nuclear reactor; and
at least one isotope production rod, the isotope production rod including an irradiation target, and the isotope production rod disposed in one of the fuel rod positions within the outer channel based on a half-life of a radioactive isotope to be produced by irradiating the irradiation target.

5. The fuel bundle of claim 4, wherein the isotope production rod is positioned within the outer channel based on the half-life of the radioactive isotope to be produced by irradiating the irradiation target, and the duration that the isotope production rod will remain in the nuclear reactor.

6. The fuel bundle of claim 4 or 5, wherein the isotope production rod is positioned within the outer channel based on the half-life of the radioactive isotope to be produced by irradiating the irradiation target, the duration that the isotope production rod will remain in the nuclear reactor, and a neutron absorption rate of the irradiation target to produce the radioactive isotope.

7. The fuel bundle of any of claims 4 to 6, wherein the isotope production rod is positioned within the outer channel based on the half-life of the radioactive isotope to be produced by irradiating the irradiation target, the duration that the isotope production rod will remain in the nuclear reactor, the neutron absorption rate of the irradiation target to produce the radioactive isotope, and a desired specific activity of the radioactive isotope being produced.

8. The fuel bundle of any of claims 4 to 7, wherein the isotope production rod is positioned within the outer channel based on the half-life of the radioactive isotope to be produced by irradiating the irradiation target, the duration that the isotope production rod will remain in the nuclear reactor, the neutron absorption rate of the irradiation target to produce the radioactive isotope, and an amount of neutron flux in different areas of the fuel bundle.

9. The fuel bundle of any of claims 4 to 8, wherein the irradiation target is cobalt-59.

10. The fuel bundle of any of claims 4 to 9, wherein the fuel bundle includes a plurality of isotope production rods, and the isotope production rods are located at, at least one corner of the outer channel.

11. The fuel bundle of claim 9, wherein the fuel bundle includes a 10 by 10 array of fuel rod positions, the (10,10) position at a corner of the outer channel will be positioned adjacent a gamma detector, and the isotope production rods are positioned as follows:
for 1 isotope production rod, position at the (1,1) fuel rod position;
for 2 isotope production rods, position at one of (i) the (1,1) and either of the (10,1) and (1,10) fuel rod positions, and (ii) position at the (10,1) and (1,10) fuel rod positions;
for 3 isotope production rods, position at the (1,1), (10, 1) and (1,10) fuel rod positions;
for 4 isotope production rods, position at the (1,1), (10,1), (1,10), and either of the (2,1) and (1,2) fuel rod positions; and
for 5 isotope production rods, position at the (1,1), (10,1), (1,10), (2,1), (1,2) rod positions.

12. The fuel bundle of any of claims 4 to 10, wherein the irradiation target is one of nickel-62 and thulium-169, the fuel bundle includes a 10 by 10 array of fuel rod positions, the (10,10) position at a corner of the outer channel will be positioned adjacent a gamma detector, and the isotope production rods are positioned as follows:
for 1 isotope production rod, position at the (1,1) fuel rod position;
for 2 isotope production rods, position at one of (i) the (1,1) and either of the (10,1) and (1,10) fuel rod positions, and (ii) position at the (10,1) and (1,10) fuel rod positions;
for 3 isotope production rods, position at the (1,1), (10, 1) and (1,10) fuel rod positions;
for 4 isotope production rods, position at the (1,1), (10,1), (1,10), and either of the (2,1) and (1,2) fuel rod positions; and
for 5 isotope production rods, position at the (1,1), (10,1), (1,10), (2,1), (1;2) rod positions.

13. The fuel bundle of any of claims 4 to 12, wherein the irradiation target is iridium-191.

14. The fuel bundle of any of claims 4 to 13, wherein the fuel bundle includes at least one water rod located near a center of the outer channel, and the isotope production rod is located next to the water rod.

15. An arrangement of fuel bundles, comprising:
a gamma detector,
at least one fuel bundle, the fuel bundle including,
an outer channel,
a plurality of fuel rods disposed in fuel rod positions within the outer channel, the fuel rods including nuclear fuel for sustaining a nuclear reaction in the nuclear reactor, and
at least one isotope production rod, the isotope production rod including an irradiation target, the irradiation target emitting gamma particles if irradiated, and the isotope production rod disposed in one of the fuel rod positions within the outer channel based on a location of the gamma detector with respect to the fuel bundle.
